# EUROPÄISCHE PATENTSCHRIFT

(11) **EP 1 830 116 B1**
(45) Veröffentlichungstag und Bekanntmachung des Hinweises auf die Patenterteilung: **02.04.2008**
(21) Anmeldenummer: 07103203.1
(22) Anmeldetag: 28.02.2007
(51) Int. Cl.: F16K 31/06

(54) **Elektropneumatisches Sitzventil, insbesondere zum Einsatz als patronenartiges Vorsteuerventil**
Electro-pneumatic seat valve, in particular for use as a cartridge-like servo valve
Soupape à siège électropneumatique, en particulier destinée à l'utilisation en tant que soupape pilote de type cartouche

(30) Priorität: 02.03.2006 DE 102006009690
(43) Veröffentlichungstag der Anmeldung: 05.09.2007
(73) Patentinhaber: Bosch Rexroth AG, 71701 Schwieberdingen (DE)
(72) Erfinder: Jungeilges, Rainer, 71282, Hemmingen (DE)
(74) Vertreter: Kietzmann, Lutz

(56) Entgegenhaltungen:
- WO-A-20/06020964
- DE-A1- 10 350 790
- US-B1- 6 425 409

## Beschreibung

Die vorliegende Erfindung betrifft ein elektropneumatisches Sitzventil, insbesondere ein patronenartiges Vorsteuerventil, mit einer innerhalb eines Gehäuses untergebrachten elektrischen Spule zum elektromagnetischen Antrieb eines beweglichen Ankers, der über eine Feder rückgestellt und über Ankerführungsmittel axial zur stirnseitigen Betätigung eines Ventilsitzes geführt ist, und der zur Verstärkung der magnetischen Kraft mit magnetischen Flussleitmitteln zusammenwirkt.

Das Einsatzgebiet elektropneumatischer Sitzventile der hier interessierenden Art ist vornehmlich auf die Anwendung als Vorsteuerventil konzentriert. Ein Vorsteuerventil schaltet den Steuerdruck von pneumatischen Wegeventilen, deren Ventilglied - vorzugsweise Schieber - zumindest in eine Bewegungsrichtung per Steuerdruck betätigt werden. Das Vorsteuerventil selbst wird dabei elektrisch angesteuert. Über die Vorsteuerung wird nicht allein das elektrische Ansteuersignal in ein pneumatisches Ansteuersignal umgewandelt; es wird darüber hinaus auch eine Art Verstärkung des Ansteuersignals bewirkt. Vorsteuerventile werden mit eigenem Gehäuse zum Anschrauben oder in der Bauform eines Patronenventils zum Einsetzen in eine korrespondierende Ausnehmung eines Druckmittelaggregats angeboten. Die erfindungsgegenständliche Lösung lässt sich neben Vorsteuerventilen jedoch auch für andere Arten von elektropneumatischen Sitzventilen einsetzen, vornehmlich mit monostabiler 2/2-, 3/2-Ventilfunktion.

Aus der DE 103 50 790 A1 geht ein gattungsgemäßes elektropneumatisches Sitzventil mit 3/2-Ventilfunktion hervor. Das Sitzventil besteht im Wesentlichen aus einem Ventilabschnitt mit Verschlusselement für Ventilsitze und einem Magnetabschnitt zum Antreiben des Verschlusselements. Der Magnetabschnitt weist einen ortsfesten Magnetkern mit einer diesen umgebenden elektrischen Spule auf, der in einen Spulenkörper hineinragt und Bestandteil von magnetischen Flussleitmitteln ist. Zu den magnetischen Flussleitmitteln gehört außerdem eine etwa topfförmige magnetische Abdeckung, welche gleichzeitig auch das äußere Gehäuse des Magnetabschnittes bildet und eine magnetische Platte, welche im Bereich eines koaxial zum ortsfesten Magnetkern angeordneten beweglichen Anker angeordnet ist und diesen unter anderem führt. Außen am Sitzventil ist als weiterer Hauptbestandteil ein Anschlussgehäuse angeordnet, das neben elektronischen Bauteilen auch die Anschlusskontakte des Sitzventils beherbergt.

Der Zusammenhalt der einzelnen, vom äußeren Gehäuse umschlossenen Bauteile des Sitzventils wird hier durch axiales Aneinanderpressen erzielt. Hierfür greift das topfförmige Gehäuse im Randbereich formschlüssig in das als Spritzgussteil ausgeführte Kunststoffgehäuse des Ventilabschnitts ein. Da sich durch das Aneinanderpressen der einzelnen innerhalb des Gehäuses des Magnetabschnitts untergebrachten Bauteile deren Einzeltoleranzen addieren, sind diese Bauteile äußerst präzise zu fertigen. Ansonsten ist die Funktion der formschlüssigen Verbindung des Gehäuses am Ventilabschnitt nicht zuverlässig.

Aus der EP 0 365 146 B1 geht ein weiteres elektropneumatisches Sitzventil hervor, welches sich an Stelle eines geschlossenen, topfförmigen Gehäuses seitens des Magnetabschnitts eines offenen Gehäuses bedient, welches die elektrische Spule schützt und im Wesentlichen lediglich aus einem U-förmigen Flussleitbügel besteht, der daneben auch Bestandteil der magnetischen Flussleitmittel dieses Sitzventils ist. Des Weiteren dient der U-förmige Flussleitbügel auch der lösbaren Befestigung des hier nach Art eines Patronenventils ausgebildeten Sitzventils an einer korrespondierenden Ausnehmung seitens eines Gehäuses eines - hier nicht näher beschriebenen - Geräts. Diese lösbare Befestigung erfolgt unter Vermittlung einer sich nach radial außen erstreckenden Polplatte, die außenradial Bestandteil eines Bajonettverschlusses zur Befestigung des Sitzventils am Gehäuse ist. Die vom U-förmigen Flussleitbügel und der Polplatte eingeschlossenen Bauteile - insbesondere die elektrische Spule - werden über eine seitens der Polplatte angeordnete Schraubverbindung fixiert. Insgesamt erweist sich diese technische Lösung entgegen dem vorstehend diskutierten Stand der Technik zwar als relativ bauteiltoleranzunempfindlich, jedoch bewirkt die Schraubverbindung eine recht aufwändige Montage.

Es ist daher die Aufgabe der vorliegenden Erfindung, ein gattungsgemäßes elektropneumatisches Sitzventil, das insbesondere als patronenartiges Vorsteuerventil verwendbar, zu schaffen, das aus wenigen einfach montierbaren Einzelteilen besteht, welche sich bauraumsparend und sicher miteinander verbinden lassen.

Die Aufgabe wird ausgehend von einem elektropneumatischen Sitzventil gemäß dem Oberbegriff von Anspruch 1 in Verbindung mit dessen kennzeichnenden Merkmalen gelöst.

Die nachfolgenden abhängigen Ansprüche geben vorteilhafte Weiterbildungen der Erfindung wieder.

Die Erfindung schließt die technische Lehre ein, dass zur Befestigung der elektrischen Spule sowie den diese umgebenden Flussleitmitteln im Gehäuse mindestens ein stabförmiges Fixierelement vorgesehen ist, das im Wesentlichen quer zur Längsachse durch korrespondierende Öffnungen im Gehäuse sowie einem von den Flussleitmitteln freigelassenen Innenraum gesteckt ist.

Der Vorteil der erfindungsgemäßen Lösung beruht auf der konstruktiven Voraussetzung, dass das Sitzventil nicht von der Stirnseite her an dem hiermit zusammenwirkenden pneumatischen Gerät zu befestigen ist, sondern zumindest soweit in eine das Gehäuse für das Sitzventil bildende Ausnehmung des pneumatischen Geräts eingesteckt ist, dass eine Fixierung hierin über querverlaufende stabförmige Fixierelemente erfolgen kann. Die erfindungsgemäße Lösung stellt den für das insoweit erforderliche Durchdringen der stabförmigen Fixierelemente erforderlichen freizulassenden Innenraum bereit, der innerhalb der die Spule umgebenden Flussleitmittel liegt. Das erfindungsgemäße Konstruktionsprinzip kommt ohne Schraubelemente und andere aufwändig zu montierende Bauteile aus und lässt sich durch einfache Steckmontage herstellen.

Flussleitmittel, welche sich im Zusammenhang mit der erfindungsgemäßen Lösung besonders vorteilhaft verwenden lassen, bestehen im Wesentlichen aus einem U-förmig ausgebildeten Flussleitbügel sowie eine hiermit korrespondierende, den beweglichen Anker über einen zentralen Durchbruch führende Polplatte. Die Polplatte wird dabei von dem U-förmigen Flussleitbügel umschlossen. Hierdurch kommt dem Flussleitbügel auch eine Gehäusefunktion zu, denn dieses Bauteil schützt die innenliegenden Bestandteile des erfindungsgemäßen Sitzventils.

Innenliegende Bauteile sind hauptsächlich die elektrische Spule, die Polplatte sowie ein unter anderem auch zur Führung des beweglichen Ankers dienender Ventilkörper. Vorzugsweise ist in dem durch den U-förmigen Flussleitbügel gebildeten Innenraum benachbart zur hierin bodenseitig untergebrachten elektrischen Spule die Polplatte angeordnet, welche zur gegenüberliegenden Seite hin, an den Ventilkörper zum formschlüssigen Verbinden mit dem Öffnungsbereich des U-förmigen Flussleitbügels grenzt. Insoweit handelt es sich bei diesem Ventilkörper um ein funktionsintegriertes Bauteil. Insgesamt eröffnet diese Konstruktion eine bauraumsparende Anordnung der einzelnen, zu montierenden Bauteile des Sitzventils.

Gemäß einer die Erfindung weiter verbessernden Maßnahme ist vorgesehen, dass der Flussleitbügel zu dem der Öffnung gegenüberliegenden Ende mit einem ortsfesten Magnetkern versehen ist, der als weiterer Bestandteil der magnetischen Flussleitmittel mit dem axial benachbart innerhalb der elektrischen Spule beweglich angeordneten Anker zusammenwirkt. Die zur Rückstellung des beweglichen Ankers im stromlosen Zustand der elektrischen Spule erforderliche Feder kann dabei vorteilhafterweise zwischen dem beweglichen Anker und der Polplatte angeordnet sein. Als rückstellende Feder eignet sich vorzugsweise eine als Schraubenfeder aus Metall ausgebildete Druckfeder.

Der bewegbare Anker wirkt vorzugsweise unmittelbar stirnseitig nach Art eines Verschlusselements mit einem Ventilsitz zusammen. Der Ventilsitz kann dabei in dem das Sitzventil umschließende Gehäuse ausgebildet sein oder in dem Ventilkörper, der ortsfest mit der Spule verbunden ist.

Gemäß einer anderen, die Erfindung verbessernden Maßnahme ist vorgesehen, dass als stabförmige Fixierelemente zwei Zylinderstifte zum Einsatz kommen, die symmetrisch im Bereich beidseits des beweglichen Ankers angeordnet sind. An dieser Stelle lässt sich ohne konstruktive Nachteile der zum Hindurchstecken der Fixierelemente erforderliche Durchbruch bereitstellen. In Axialrichtung des Sitzventils betrachtet sind die stabförmigen Fixierelemente vorzugsweise zwischen der elektrischen Spule und der Polplatte angeordnet. Eine den Durchbruch für die Fixierelemente schaffende Ausnehmung seitens der elektrischen Spule (Spulenkörper) oder der Polplatte lässt sich fertigungstechnisch einfach realisieren. Durch diese Anordnung der Fixierelemente wird sichergestellt, dass der Ventilkörper stirnseitig in allen Betriebszuständen an der gegenüberliegenden Fläche des Gehäuses fest anliegt.

Um in diesem Zusammenhang zu beherrschende bauteilbedingte Maßtoleranzen auszugleichen, wird weiterhin vorgeschlagen, die als Zylinderstifte ausgebildeten stabförmigen Fixierelemente zumindest über deren Mittelbereich mit einer Durchbiegung zu versehen, die mit einer korrespondierenden Anformung seitens der Polplatte kraftschlüssig zusammenwirkt und so bauteilbedingte Maßtoleranzen innerhalb der Toleranzkette ausgleicht. Die Durchbiegung entsteht dabei erst, wenn der Zylinderstift eingeführt wird, weil die Aufnahmebohrungen im Gehäuse nicht exakt fluchtend mit der Ausnehmung seitens der Polplatte sind.

Alternativ hierzu ist es auch möglich, die stabförmigen Fixierelemente im Mittelbereich mit einer Rastrinne auszustatten, welche mit der korrespondierenden Anformung seitens der Polplatte formschlüssig zusammenwirkt. Das formschlüssige Zusammenwirken gewährleistet darüber hinaus eine zuverlässige Sicherung der Stiftverbindung nach Montage.

Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Fig.1: eine perspektivische Außenansicht eines elektropneumatischen Sitzventils,
- Fig.2: einen Längsschnitt durch das Sitzventil nach Fig.1,
- Fig.3: eine perspektivische Ansicht des Bauteils Polplatte,
- Fig.4: eine teilweise aufgebrochene perspektivische Ansicht des Sitzventils mit einer ersten Ausführungsform des Fixierelements, und
- Fig.5: eine teilweise aufgebrochene perspektivische Ansicht des Sitzventils mit einer zweiten Ausführungsform des Fixierelements.

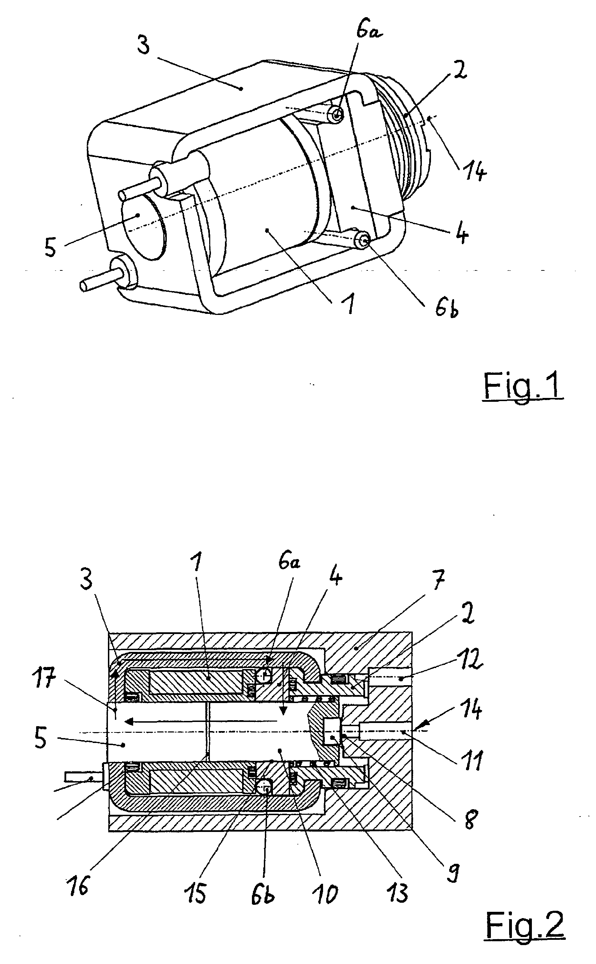

Gemäß Fig. 1 besteht das hier dargestellte, als Patronenventil ausgebildete elektropneumatische Sitzventil im Wesentlichen aus einer elektrischen Spule 1 als elektromagnetischer Antrieb, welche einen - hier nicht erkennbaren - beweglichen Anker innerhalb eines Ventilkörpers 2 betätigt. Die elektrische Spule 1 ist umgeben von einem im Wesentlichen U-förmig ausgebildeten Flussleitbügel 3, der Bestandteil der magnetischen Flussleitmittel des Sitzventils ist. Der U-förmige Flussleitbügel 3 wirkt zum Schließen des Magnetkreises mit einer Polplatte 4 zusammen, welche genau so wie der Flussleitbügel 3 aus einem weichen magnetischen Eisenwerkstoff besteht. Am Magnetkreis ist neben dem bereits erwähnten beweglichen Anker auch ein fester Anker 5 beteiligt, der an dem der Öffnung des U-förmigen Flussleitbügels 3 gegenüberliegenden Ende in eine korrespondierende Öffnung des Flussleitbügels 3 eingepresst ist. Über die Einpresstiefe des ortsfesten Magnetkerns 5 im Flussleitbügel 3 wird der Hub des beweglichen Ankers eingestellt. Über stabförmige Fixierelemente 6a und 6b erfolgt die Befestigung des Sitzventils.

Gemäß Fig.2 greifen die stabförmigen Fixierelemente 6a und 6b zu diesem Zwecke mit beiden Enden in korrespondierende Ausnehmungen seitens eines den U-förmigen Flussleitbügel 3 umgebenden Gehäuses 7 ein. Das Gehäuse 7 besteht aus Kunststoff und ist Bestandteil eines - hier nicht weiter dargestellten - Druckmittelaggregats. Im Gehäuse 7 ist ein Ventilsitz 8 ausgebildet, der mit einem Verschlusselement 9 des beweglichen Ankers 10 nach Art eines Sitzventils zusammenwirkt. Über einen Speisedruckanschluss 11 steht Druckluft am Ventilsitz 8 an. Das Gehäuse 7 weist weiterhin einen Arbeitsanschluss 12 auf.

Der über die elektrische Spule 1 angetriebene bewegliche Anker 10 ist über eine Feder 13 rückgestellt, so dass der bewegliche Anker 10 im stromlosen Zustand der elektrischen Spule 1 über das Verschlusselement 9 auf den Ventilsitz 8 gepresst wird. Hierbei wirkt die Kraft der Feder 13 zwischen dem ventilsitzseitigen Ende und der Polplatte 4.

Zur Befestigung der elektrischen Spule 1 sowie den diese umgebenden Flussleitmitteln im Gehäuse 7 sind die beiden stahlförmigen Fixierelemente 6a und 6b quer zur Längsachse 14 des Sitzventils durch korrespondierende - hier nicht erkennbare - Öffnungen im Gehäuse 7 gesteckt. Dabei durchdringen die beiden stabförmigen Fixierelemente 6a und 6b einen von den Flussleitmitteln freigelassenen Innenraum innerhalb des elektropneumatischen Sitzventils. Dieser wird in diesem Ausführungsbeispiel durch zugeordnete Absätze an der Polplatte 4 gebildet. Die Polplatte 4 lässt zum beweglichen Anker 10 einen Nebenluftspalt 15 frei. Zwischen dem beweglichen Anker 10 und dem ortsfesten Magnetkern 5 besteht weiterhin ein Arbeitsluftspalt 16. Über die Pfeile 17 ist der Verlauf des Magnetkreises ersichtlich.

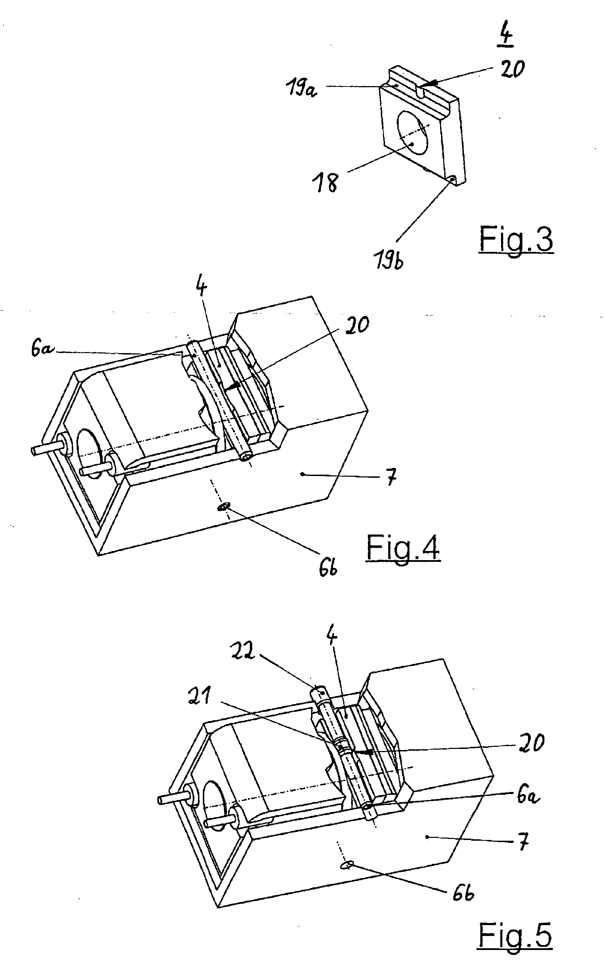

Die in Fig.3 als Einzelteil dargestellte Polplatte 4 weist einen zentralen Durchbruch 18 für den - hier nicht dargestellten - beweglichen Anker auf. Die zur Durchführung der stabförmigen Fixierelemente vorgesehenen Absätze 19a, 19b sind durch Abprägung hergestellt. Bei der Abprägung wird gleichzeitig jeweils in der Mitte der Absätze 19a und 19b eine Anformung 20 erzeugt.

Gemäß Fig.4 wirkt die Anformung 20 mit den beiden als Zylinderstifte ausgebildeten Fixierelementen 6a, 6b zusammen, in dem die beiden Fixierelemente 6a, 6b in ihren Mittelbereich eine Durchbiegung erfahren. Hierdurch werden die Fixierelemente 6a und 6b kraftschlüssig in der dargestellten, montierten Position gesichert.

In der alternativen Ausführungsform nach Fig.5 ist zur Fixierung der zylinderstiftartig ausgebildeten stabförmigen Fixierelemente 6a und 6b in deren Mittelbereich jeweils eine Rastrille 21 vorgesehen. Die Rastrille 21 der Fixierelemente 6a und 6b wirkt formschlüssig mit den Anformungen 20 seitens der Polplatte 4 zusammen. Durch die Formgebung der stabförmigen Fixierelemente 6a und 6b mit Rastrille 21 wird erst im letzten Teil des Fügeweges die axiale Verspannung des im Gehäuse 7 angeordneten Sitzventils bewirkt, da ein am verbleibenden Ende der Fixierelemente 6a bzw. 6b angeordneter Stiftkopf 22 mit größerem Durchmesser erst dann in die ihm zugeordnete Aufnahmebohrung seitens des Gehäuses 7 gelangt, wenn das gegenüberliegende Stiftende bereits die ihm zugeordnete Aufnahmebohrung seitens des Gehäuses 7 erreicht hat.

### Bezusszeichenliste

- 1: elektrische Spule
- 2: Ventilkörper
- 3: Flussleitbügel
- 4: Polplatte
- 5: fester Anker
- 6: Fixierelement
- 7: Gehäuse
- 8: Ventilsitz
- 9: Verschlusselement
- 10: beweglicher Anker
- 11: Speisedruckanschluss
- 12: Arbeitsanschluss
- 13: Feder
- 14: Längsachse
- 15: Nebenluftspalt
- 16: Arbeitsluftspalt
- 17: Magnetkreis
- 18: Durchbruch
- 19: Absatz
- 20: Anformung
- 21: Rastrille
- 22: Stiftkopf

## Patentansprüche

1. Elektropneumatisches Sitzventil, insbesondere patronenartiges Vorsteuerventil, mit einer innerhalb eines Gehäuses (7) untergebrachten elektrischen Spule (1) zum elektromagnetischen Antrieb eines beweglichen Ankers (10), der über eine Feder (13) rückgestellt und über Ankerführungsmittel axial zur stirnseitigen Betätigung eines Ventilsitzes (8) geführt ist, und der zur Verstärkung der magnetischen Kraft mit magnetischen Flussleitmitteln zusammenwirkt,
**dadurch gekennzeichnet, dass** zur Befestigung der Spule (1) sowie den diese umgebenden Flussleitmitteln im Gehäuse (7), mindestens ein stabförmiges Fixierelement (6a, 6b) vorgesehen ist, das im Wesentlichen quer zur Längsachse (14) durch korrespondierende Öffnungen im Gehäuse (7) sowie einem von den Flussleitmitteln freigelassenen Innenraum gesteckt ist.

2. Elektropneumatisches Sitzventil nach Anspruch 1,
**dadurch gekennzeichnet, dass** die Flussleitmittel einen im wesentlichen U-förmig ausgebildeten Flussleitbügel (3) sowie eine hiermit korrespondierende und den beweglichen Anker (10) über einen zentralen Durchbruch (18) führende Polplatte (4) umfassen.

3. Elektropneumatisches Sitzventil nach Anspruch 2,
**dadurch gekennzeichnet, dass** in dem durch den U-förmigen Flussleitbügel (3) gebildeten Innenraum benachbart zur hierin bodenseitig untergebrachten elektrischen Spule (1) die Polplatte (4) angeordnet ist, welche zur gegenüberliegenden Seite hin an einen Ventilkörper (2) zum formschlüssigen Verbinden mit dem Öffnungsbereich des U-förmigen Flussleitbügel (3) grenzt.

4. Elektropneumatisches Sitzventil nach Anspruch 1,
**dadurch gekennzeichnet, dass** das mindestens eine stabförmige Fixierelement (6a, 6b) zwischen der elektrischen Spule (1) und der Polplatte (4) angeordnet ist.

5. Elektropneumatisches Sitzventil nach Anspruch 1,
**dadurch gekennzeichnet, dass** die stabförmigen Fixierelemente (6a, 6b) als zwei Zylinderstifte ausgebildet sind, die symmetrisch im Bereich beidseits des beweglichen Ankers (10) angeordnet sind.

6. Elektropneumatisches Sitzventil nach Anspruch 1,
**dadurch gekennzeichnet, dass** zur Fixierung des als Zylinderstift ausgebildeten stabförmigen Fixierelements (6a, 6b) eine zumindest sich über dessen Mittelbereich erstreckende Durchbiegung vorgesehen ist, die mit einer korrespondierenden Anformung (20) seitens der Polplatte (4) kraftschlüssig zusammenwirkt (Fig.4).

7. Elektropneumatisches Sitzventil nach Anspruch 1,
**dadurch gekennzeichnet, dass** zur Fixierung des als Zylinderstift ausgebildeten stabförmigen Fixierelements (6a, 6b) eine in dessen Mittelbereich angeordnete Rastrille (21) vorgesehen ist, die mit einer korrespondierenden Anformung (20) seitens der Polplatte (4) formschlüssig zusammenwirkt (Fig.5).

8. Elektropneumatisches Sitzventil nach einem der vorstehenden Ansprüche,
**dadurch gekennzeichnet, dass** der Flussleitbügel (3) zu dem der Öffnung gegenüberliegenden Ende mit einem ortsfesten Magnetkern (5) versehen ist, der als weiterer Bestandteil der magnetischen Flussleitmittel mit dem axial benachbarten beweglichen Anker (10) zusammenwirkt.

9. Elektropneumatisches Sitzventil nach einem der vorstehenden Ansprüche,
**dadurch gekennzeichnet, dass** die den beweglichen Anker (10) im stromlosen Zustand der elektrischen Spule (1) rückstellende Feder (13) axial zwischen dem beweglichen Anker (10) und der Polplatte (4) als Druckfeder fungierend angeordnet ist.

10. Elektropneumatisches Sitzventil nach einem der vorstehenden Ansprüche,
**dadurch gekennzeichnet, dass** das Gehäuse (7) Bestandteil eines Druckmittelaggregats ist, ausgewählt aus einer Gruppe umfassend Zylinder, Ventil, Druckmittelverteiler.

11. Elektropneumatisches Sitzventil nach einem der vorstehenden Ansprüche,
**dadurch gekennzeichnet, dass** der Ventilsitz (8) im Gehäuse (7) oder im Ventilkörper (2) ausgebildet ist.

## Claims

1. An electropneumatic seat valve, in particular a cartridge-like pilot valve having an electric coil (1) accommodated within a housing (7) for electromagnetically driving a moveable armature (10), which is returned by means of a spring (13) and axially guided for the end-side actuation of a valve seat (8) via armature guiding means and cooperates with magnetic flux conducting means to enhance the magnetic force,
**characterised in that**, for mounting the coil (1) and the flux conducting means surrounding the latter within said housing (7), at least one rod-shaped fixing element (6a, 6b) is provided, which is inserted through corresponding openings in the housing (7) and an inner cavity defined by the flux conducting means in a direction essentially transverse to a longitudinal axis (14).

2. The electropneumatic seat valve according to claim 1,
**characterised in that** the flux conducting means comprise an essentially u-shaped flux conducting bracket (3) and a pole plate (4) corresponding thereto for guiding the moveable armature (10) across a central aperture (18).

3. The electropneumatic seat valve according to claim 2,
**characterised in that** said pole plate (4), which abuts on a valve body (2) at the opposite side for positive connection with the opening area of the u-shaped flux conducting bracket (3), is arranged adjacent to the electric coil (1) and accommodated on the bottom within the interior cavity formed by the u-shaped flux conducting bracket (3).

4. The electropneumatic seat valve according to claim 1,
**characterised in that** said at least one rod-shaped fixing element (6a, 6b) is arranged between said electric coil (1) and said pole plate (4).

5. The electropneumatic seat valve according to claim 1,
**characterised in that** said rod-shaped fixing element (6a, 6b) is formed as two cylindrical pins symmetrically disposed in the area on either side of the moveable armature (10).

6. The electropneumatic seat valve according to claim 1,
**characterised in that**, for fixing said rod-shaped fixing element (6a, 6b) formed as a cylindrical pin, a bend extending at least over a central portion thereof is provided frictionally cooperating with a corresponding boss (20) on the side of said pole plate (4) (Fig. 4).

7. The electropneumatic seat valve according to claim 1,
**characterised in that**, for fixing said rod-shaped fixing element (6a, 6b) formed as a cylindrical pin, a detent groove (21) arranged in a central portion thereof is provided positively cooperating with a corresponding boss (20) on the side of said pole plate (4) (Fig. 5).

8. The electropneumatic seat valve according to any one of the preceding claims,
**characterised in that** said flux conducting bracket (3), at the end opposite the opening, is provided with a fixed magnet core (5) cooperating with the axially adjacent moveable armature (10) as a further component of the magnetic flux conducting means.

9. The electropneumatic seat valve according to any one of the preceding claims,
**characterised in that** said spring (13) for returning the moveable armature (10) in the deenergized state of the electric coil (1) is axially arranged between the moveable armature (10) and the pole plate (4) and functions as a compression spring.

10. The electropneumatic seat valve according to any one of the preceding claims,
**characterised in that** said housing (7) is part of a pressurized-medium unit selected from the group comprising a cylinder, a valve, a pressure medium manifold.

11. The electropneumatic seat valve according to any one of the preceding claims,
**characterised in that** said valve seat (8) is formed in said housing (7) or in said valve body (2).

## Revendications

1. Soupape électropneumatique à siège, en particulier soupape pilote de type cartouche, comprenant une bobine électrique (1) logée à l'intérieur d'un boîtier (7) pour l'entraînement électromagnétique d'un induit mobile (10), lequel est rappelé au moyen d'un ressort (13) et est guidé via des moyens de guidage axialement pour l'actionnement côté frontal d'un siège de soupape (8), et qui coopère avec des moyens de guidage de flux magnétique pour l'amplification de la force magnétique,
**caractérisée en ce que**, pour la fixation de la bobine (1) ainsi que des moyens de guidage de flux magnétique qui entourent cette bobine dans le boîtier (7), il est prévu au moins un élément de fixation (6a, 6b) en forme de barreau, qui est enfiché sensiblement transversalement à l'axe longitudinal (14) à travers des ouvertures correspondantes dans le boîtier (7) et à travers une chambre intérieure dégagée par les moyens de guidage de flux magnétique.

2. Soupape électropneumatique à siège selon la revendication 1,
**caractérisée en ce que** les moyens de guidage de flux magnétique comprennent un étrier de guidage réalisé sensiblement en forme de U (3) ainsi qu'une plaque polaire (4) qui correspond à l'étrier et qui guide l'induit mobile (10) via une traversée centrale (18).

3. Soupape électropneumatique à siège selon la revendication 2,
**caractérisée en ce que** dans la chambre intérieure formée par l'étrier de guidage (3) en forme de U est agencée la plaque polaire (4) au voisinage de la bobine électrique (1) logée dans cette chambre du côté du fond, ladite plaque polaire étant adjacente à un corps de soupape (2) pour la liaison à coopération de formes avec la zone d'ouverture de l'étrier de guidage (3) en forme de U.

4. Soupape électropneumatique à siège selon la revendication 1,
**caractérisée en ce que** ledit au moins un élément de fixation (6a, 6b) en forme de barreau est agencé entre la bobine électrique (1) et la plaque polaire (4).

5. Soupape électropneumatique à siège selon la revendication 1,
**caractérisée en ce que** les éléments de fixation (6a, 6b) en forme de barreau sont réalisés comme deux tiges cylindriques qui sont agencées symétriquement dans la zone sur les deux côtés de l'induit mobile (10).

6. Soupape électropneumatique à siège selon la revendication 1,
**caractérisée en ce que**, pour la fixation de l'élément de fixation (6a, 6b) en forme de barreau réalisé comme une tige cylindrique, il est prévu au moins un coudage qui s'étend sur leur région médiane et qui coopère à coopération de forces avec un relief correspondant (20) du côté de la plaque polaire (4) (figure 4).

7. Soupape électropneumatique à siège selon la revendication 1,
**caractérisée en ce que**, pour la fixation de l'élément de fixation (6a, 6b) en forme de barreau réalisé comme une tige cylindrique, il est prévu une rainure d'enclenchement (22) ménagée dans sa la zone médiane, qui coopère à coopération de formes avec un relief correspondant (20) du côté de la plaque polaire (4) (figure 5).

8. Soupape électropneumatique à siège selon l'une des revendications précédentes,
**caractérisée en ce que** l'étrier de guidage de flux (3) est doté, à l'extrémité opposée à l'ouverture, d'un noyau magnétique stationnaire (5) qui coopère, à titre de composant supplémentaire des moyens de guidage de flux magnétique, avec l'induit mobile (10) axialement voisin.

9. Soupape électropneumatique à siège selon l'une des revendications précédentes,
**caractérisée en ce que** le ressort (13) qui rappelle l'induit mobile (10) lorsque la bobine électrique (1) est sans courant, est agencé axialement entre l'induit mobile (10) et la plaque polaire (4), faisant office de ressort de compression.

10. Soupape électropneumatique à siège selon l'une des revendications précédentes,
**caractérisée en ce que** le boîtier (7) est un composant d'une unité à fluide sous pression, choisie parmi un groupe comprenant des cylindres, des soupapes, et des distributeurs de fluide sous pression.

11. Soupape électropneumatique à siège selon l'une des revendications précédentes,
**caractérisée en ce que** le siège de soupape (8) est réalisé dans le boîtier (7) ou dans le corps de soupape (2).
